(19)

Europäisches
Patentamt
European
Patent Office
Office européen
des brevets

(11)    **EP 2 597 837 A1**

(12)    **EUROPEAN PATENT APPLICATION**

(43) Date of publication:
**29.05.2013  Bulletin 2013/22**

(51) Int Cl.:
**H04L 27/34** (2006.01)    **H04L 1/00** (2006.01)

(21) Application number: **11190793.7**

(22) Date of filing: **25.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Panasonic Corporation**
**Kadoma-shi**
**Osaka 571-8501 (JP)**

(72) Inventor: **Petrov, Mihail**
**63225 Langen (DE)**

(74) Representative: **Grünecker, Kinkeldey,**
**Stockmair & Schwanhäusser**
**Leopoldstrasse 4**
**80802 München (DE)**

(54)    **Improved cell interleaving and component separation for rotated constellations**

(57)    The present invention provides methods, transmitters, and receivers for digital communication systems with improved cell interleaving and component separation for rotated constellations in two or more dimensions.

This is achieved by providing two independent functional blocks for spreading burst errors over a FEC block and for spreading the rotated constellation components over time and frequency, respectively. In this manner, each block may be optimized for its specific function.

# Fig. 6A

EP 2 597 837 A1

**Description**

The present invention relates to the field of digital communications and more specifically to improving the performance of rotated QAM constellations, as well as to corresponding methods, transmitters, and receivers.

BACKGROUND OF THE INVENTION

DVB-T2 (Digital Video Broadcasting - Second Generation Terrestrial) (ETSI EN 302.755) is an improvement of the television standard DVB-T, and describes a second generation transmission system for digital terrestrial television broadcasting. It specifies the channel coding/modulation system intended for digital television services and generic data.

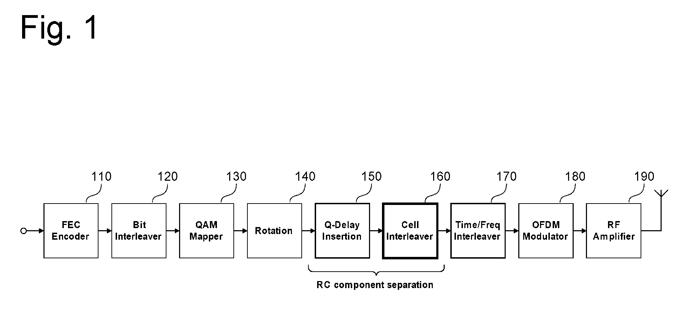

Figure 1 shows an exemplary block diagram of a transmitter-side communication chain, according to the DVB-T2 standard, which employs rotated quadrature amplitude modulation (QAM) constellations. The transmitter receives at its input binary blocks of a predetermined length, which contain the information to be transmitted.

Each information block is first encoded by a forward-error-correction (FEC) encoder 110, which is a low-density parity-check (LDPC) code in DVB-T2, the encoding process consisting in computing and appending redundancy bits to the information block in order to make its reception more robust against errors. The bits of the encoded FEC codeword, thereafter referred to as FEC block, undergo a permutation by a bit interleaver 120, which improves the robustness of the system.

The bits of the bit-interleaved FEC block are then mapped to complex quadrature amplitude modulation (QAM) symbols by means of QAM mapper 130. Typically, B bits modulate the real component and B bits modulate the imaginary component. Each component is therefore independent and can be regarded as a real-valued pulse-amplitude-modulation (PAM) symbol. Each PAM symbol takes a value from a discrete set of $2^B$ values. The present invention is not limited to a particular manner in which the B bits are mapped to PAM symbols. Further details on this mapping process can be found in document ETSI EN 302.755, which is incorporated herewith in its entirety. As a result of the mapping process, each FEC block is transformed into a block of complex QAM symbols.

The complex QAM symbols produced by the QAM mapper are then rotated in order to introduce a dependence between the two real components, which increases the robustness in fading channels. This is also referred to as the two real components being jointly encoded. These components may be regarded as identifying unique points in a 2-dimensional space, the resulting $2^{2B}$ combinations forming a 2-dimensional constellation. The rotation consists in multiplying the vector of the two real components by an orthogonal 2x2 rotation matrix, hence the term rotated constellations.

The same principle may be applied to more than two dimensions. The number of dimensions is hereafter denoted by D. In this case, a plurality D/2 of QAM symbols are jointly encoded by multiplying the vector of D real symbols by a DxD generalized rotation matrix. Again, the present invention is not limited to a particular structure of the rotation matrix.

Preferably, D is a power of 2 (usually 2, 4 or 8), and the number of PAM symbols per FEC block is a multiple of D. In the following, the rotated vectors of D real symbols will be referred to as constellation blocks and the real symbols as components or dimensions.

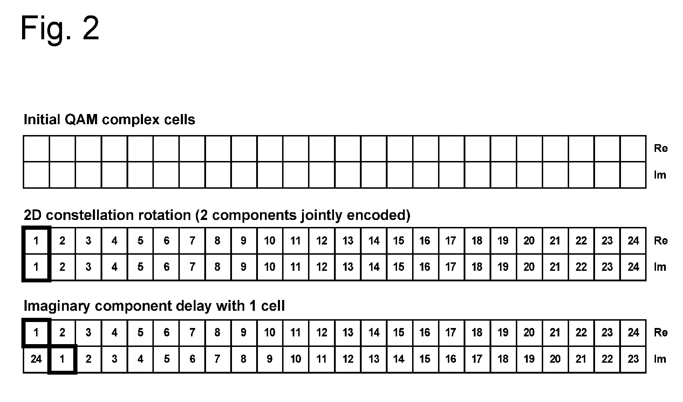

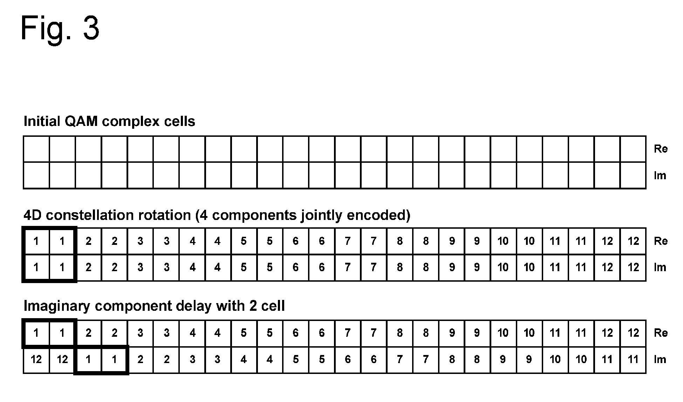

After the rotation step, the D real components that are mapped onto D/2 complex symbols undergo a further processing step whereby the D components of each constellation are mapped to D different complex symbols (also referred to as cells). This is illustrated in Figs. 2 and 3 for 2D-RC and 4D-RC, respectively. In order to achieve good performance with rotated constellations, it is necessary that the D complex symbols be spread as much as possible in time and frequency, so that the channel fading they experience is as uncorrelated as possible.

Referring again to Fig. 1, according to the DVB-T2 standard, the separation is achieved by first delaying the imaginary (or quadrature, hence the name Q-delay) components by D/2 cells, and then applying a permutation (shuffling) of the resulting cells. The latter function is performed by the cell interleaver 160. In DVB-T2 the cell permutation is a pseudo-random permutation generated using a linear feedback shift register (LFSR). In DVB-T2 the cell permutation is different for each FEC block.

In order to increase the diversity of the system, the cells of each FEC block are then spread in time and frequency by the time and frequency interleaver 170. The two types of interleaving can be performed by two different blocks, as it is the case in the DVB-T2 standard.

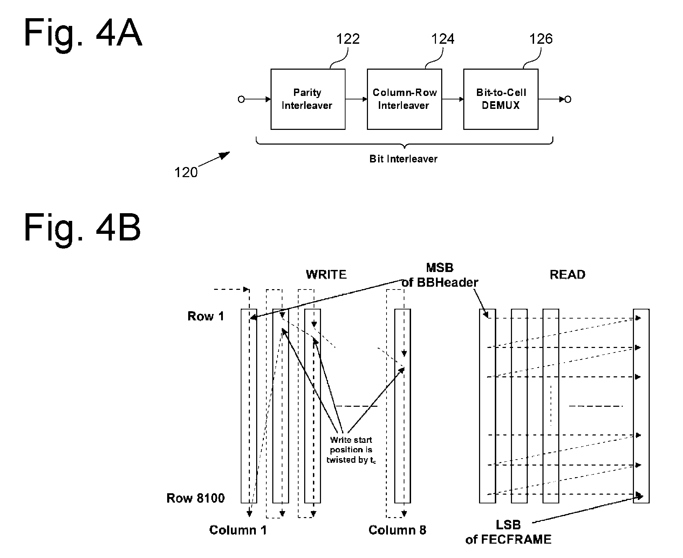

Referring now to Fig. 4A, which gives an overview of the BICM encoding, the bit interleaving process according to the DVB-T2 standard comprises three steps, namely (i) interleaving the parity bits of the systematic LDPC codeword by means of parity interleaver 122, (ii) interleaving the resulting codeword with a column-row interleaver 124, and subsequently, (iii) demultiplexing the resulting bits to cell words prior to mapping to QAM symbols. The demultiplexing is equivalent to a permutation of the columns of the column-row interleaver, and is referred to as bit-to-cell DEMUX 126 in Figure 4A.

The column-row interleaver 124 and the associated bit-to-cell DEMUX 126 are used only for higher-order constellations, such as 16-QAM, 64-QAM, and 256-QAM. For QPSK constellations only the parity interleaver 122 can be used.

Figure 4B is a schematic diagram illustrating the operation of the column-row bit interleaver of the DVB-T2 standard. The column-row interleaver component of the bit interleaver works by serially writing the data bits from the parity interleaver into an interleaver matrix, cyclically shifting (referred to as twisting) each column by a specified number of bits (as depicted in Figure 4B), and serially reading out the bits row-wise. The first bit of the FEC codeword (FEC frame) is written and read out first as shown in Figure 4B. The number of columns in the column-row interleaver is equal to the number of bits per QAM symbol, i.e. 2*B, or to twice this number.

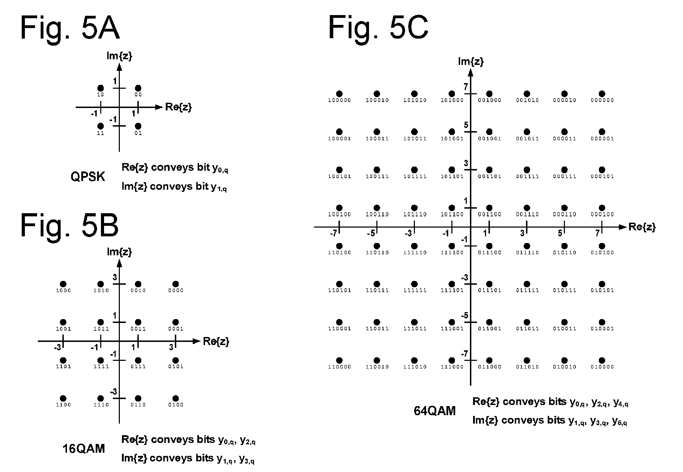

Prior to the QAM mapping, each FEC code block is first de-multiplexed into parallel cell words, each cell word containing as many bits as are encoded in one QAM constellation, that is 2*B: 2 bits for QPSK, 4 bits for 16-QAM, 6 bits for 64-QAM, and 8 bits for 256-QAM. Subsequently, each cell word from the demultiplexer is modulated according to a particular mapping constellation such as QPSK, 16-QAM, 64-QAM or 256-QAM. The constellations and the details of the Gray mapping applied to the bits according to DVB-T2 are illustrated in Fig. 5A, 5B, and 5C for QPSK, 16-QAM, and 64-QAM, respectively.

The inventor has realized that the cell interleaver in DVB-T2 performs two distinct functions. The first function is to spread the burst errors that occur in the channel as irregularly as possible throughout a FEC block. This function is performed very well by the pseudo-random cell interleaver in DVB-T2 and is applicable to both rotated and non-rotated constellations. The second function, which is achieved in conjunction with the time and frequency interleaver, is to spread the rotated constellation components over time and frequency. This function is of course relevant only for rotated constellations. However, a pseudo-random cell interleaving as in DVB-T2 achieves a sub-optimal separation of the constellation components in time and frequency. This results in sub-optimal performance in fading or erasure channels.

An improved component separation in time may be achieved by replacing the pseudo-random cell interleaver in DVB-T2 with an interleaver that is specifically optimized for separating the constellation components as far as possible in time and frequency. However, such interleavers typically have regular structures, which make them sub-optimal with respect to the first function.

SUMMARY OF THE INVENTION

Therefore, it is an object of the present invention to improve the performance of a communication system that employs rotated QAM constellations.

This is achieved by the features as set forth in the independent claims. Preferred embodiments are the subject matter of dependent claims.

It is the particular approach of the present invention to provide two independent functional blocks for spreading burst errors over a FEC block and for spreading the rotated constellation components over time and frequency, respectively. In this manner, each block may be optimized for its specific function.

According to a first aspect of the present invention, a method for transmitting digital data is provided. The method comprises the steps of encoding a block of data with a forward error correction code; mapping the encoded block of data to a sequence of real-valued symbols; applying a symbol permutation to the sequence of real-valued symbols; dividing the permuted sequence of real-valued symbols into a plurality of D-dimensional vectors and transforming each of the D-dimensional vectors by multiplying the vector with an orthogonal matrix, resulting in a plurality of constellation blocks, each constellation block consisting of D real-valued transformed symbols; mapping the real-valued transformed symbols of the plurality of constellation blocks to a sequence of complex symbols such that the D real-valued transformed symbols of each constellation block are mapped to D distinct complex symbols; and transmitting the sequence of complex symbols.

Preferably, the step of applying the symbol permutation is performed by dividing the sequence of real-valued symbols into pairs of two consecutive real-valued symbols, each pair representing a complex-valued symbol, and by shuffling the sequence of the complex-valued symbols. In other words, the permutation is performed on the complex-valued symbols rather than on the real-valued symbols.

Preferably, the mapping of the real-valued transformed symbols to the sequence of complex symbols is performed such that the D real-valued transformed symbols of each constellation block are essentially evenly distributed over the sequence of complex symbols. In this manner, time diversity can be maximized and an optimum performance can be achieved.

Preferably, the sequence of complex symbols is transmitted such that any two consecutive complex symbols of the sequence of complex symbols are transmitted either simultaneously or in the stated order. In other words, the transmission process does not alter the order of the complex symbols.

In a preferred embodiment, a bit permutation is applied to the encoded block of data, and the mapping step is applied to the permuted encoded block of data. Due to the additional bit permutation, robustness of the system is further improved. The bit permutation may be equivalent to writing the bits of the encoded block of data into a matrix column-by-column and reading out the bits row-by-row. This allows for a particularly efficient implementation.

In a particularly preferred embodiment, the steps of applying the symbol permutation and applying the bit permutation are performed by applying a single permutation to the bits of the encoded block of data, the single permutation being equivalent to a mathematical concatenation of the bit permutation and the symbol permutation. In this manner, both permutations can be absorbed in a single permutation unit.

In a preferred embodiment, the step of mapping the real-valued transformed symbols to the sequence of complex symbols is performed by mapping the D real-valued transformed symbols of each constellation block to D adjacent complex symbols, and applying a permutation to the sequence of complex symbols, said permutation being equivalent to writing the sequence of complex symbols into a matrix with D rows column by column and reading out the complex symbols row by row.

Alternatively, the step of mapping the real-valued transformed symbols to the sequence of complex symbols is performed by mapping the D real-valued transformed symbols of each constellation block to D/2 adjacent complex symbols, and applying a cyclic shift to either the real or the imaginary components of the sequence of complex symbols such that the real and the imaginary components are rotated relative to each other by a certain number of complex symbols, the certain number of complex symbols being equal to D/2 or to a number larger than D/2. In this case, an additional permutation to the sequence of cyclically shifted complex symbols may be applied, said permutation being equivalent to writing the sequence of complex symbols into a matrix with D rows column by column and reading out the complex symbols row by row, in order to further improve the diversity.

According to a second aspect of the present invention, a method for receiving digital data is provided. The method comprises the steps of receiving a sequence of complex symbols; demapping real-valued symbols of a plurality of constellation blocks from the sequence of complex symbols, the D real-valued symbols of each constellation block being essentially evenly distributed over the sequence of complex symbols; applying an inverse permutation to the sequence of real-valued symbols, the inverse permutation being adapted for reverting the symbol permutation performed by the method according to the first aspect of the present invention; demapping an encoded block of data from the permuted sequence of real-valued symbols; and subjecting the encoded block of data to forward error correction decoding.

Preferably, each real-valued symbol indicates one of a plurality of predefined pulse amplitude modulation symbols. Furthermore, D is preferably a power of 2, in particular 2 or 4 or 8.

According to a further aspect of the present invention, a transmitter for transmitting digital data is provided. The transmitter comprises an encoder adapted for encoding a block of data with a forward error correction code; a mapping unit adapted for mapping the encoded block of data to a sequence of real-valued symbols; a cell interleaver adapted for applying a symbol permutation to the sequence of real-valued symbols; a transform unit adapted for dividing the permuted sequence of real-valued symbols into a plurality of D-dimensional vectors and for transforming each of the D-dimensional vectors by multiplying the vector with an orthogonal matrix, resulting in a plurality of constellation blocks, each constellation block consisting of D real-valued transformed symbols; a separation unit adapted for mapping the real-valued transformed symbols of the plurality of constellation blocks to a sequence of complex symbols such that the D real-valued transformed symbols of each constellation block are essentially evenly distributed over the sequence of complex symbols; and a modulator adapted for transmitting the permuted sequence of complex symbols.

According to a further aspect of the present invention, a receiver for receiving digital data is provided. The receiver comprises a demodulator for receiving a sequence of complex symbols; a constellation demapper adapted for demapping real-valued symbols of a plurality of constellation blocks from the sequence of complex symbols, the D real-valued symbols of each constellation block being essentially evenly distributed over the sequence of complex symbols; a cell deinterleaver adapted for applying an inverse permutation to the sequence of real-valued symbols, the inverse permutation being adapted for reverting the symbol permutation performed by the method according to the first aspect of the present invention; a bit deinterleaver adapted for demapping an encoded block of data from the permuted sequence of real-valued symbols; and a decoder for subjecting the encoded block of data to forward error correction decoding.

The above and other objects and features of the present invention will become more apparent from the following description and preferred embodiments given in conjunction with the accompanying drawings, in which:

Fig. 1        shows a block diagram of a conventional transmitter employing rotated constellation;

Fig. 2        is a schematic diagram illustrating the separation of components of a 2D-RC;

Fig. 3        is a schematic diagram illustrating the separation of components of a 4D-RC;

Fig. 4A       shows a block diagram of a bit interleaver according to the DVB-T2 standard;

Fig. 4B       is a schematic diagram illustrating the operation of the column-row bit interleaver of the DVB-T2 standard;

Fig. 5A    is a schematic diagram illustrating the bit mapping for a QPSK constellation;

Fig.5B    is a schematic diagram illustrating the bit mapping for a 16-QAM constellation;

Fig. 5C    is a schematic diagram illustrating the bit mapping for a 64-QAM constellation;

Fig. 6A    shows a block diagram of a transmitter according to an embodiment of the present invention;

Fig. 6B    shows a block diagram of a transmitter according to another embodiment of the present invention;

Fig. 7    shows a mapping for two-dimensional rotated constellations with various delay periods;

Fig. 8    shows exemplary component mappings for four-dimensional rotated constellations with various delay periods;

Fig. 9    shows exemplary component mappings with pairing for two-dimensional and four-dimensional rotated constellations;

Fig. 10A    is an illustration of the preferred cell permutation for two-dimensional constellations;

Fig. 10B    is an illustration of the preferred cell permutation for four-dimensional constellations;

Fig. 11A    shows the resulting mapping of the constellation components after the permutation step for two-dimensional rotated constellations;

Fig. 11B    shows the resulting mapping of the constellation components after the permutation step for four-dimensional rotated constellations;

Fig. 12    is a block diagram of a receiver employing rotated constellation in accordance with an embodiment of the present invention.

DETAILED DESCRIPTION

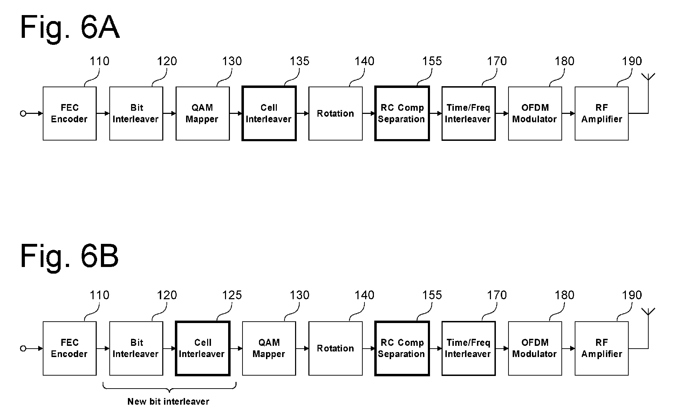

Fig. 6A is a block diagram of a transmitter-side communication chain in accordance with an embodiment of the present invention. The block diagram is similar to that of Fig. 1, wherein like elements are denoted by like reference numerals, a repetition of the detailed explanation of which is omitted.

The transmitter-side communication chain of Fig. 6A differs from that of Fig. 1 in that cell interleaving and constellation component separation are implemented in two distinct functional units, i.e., in cell interleaver 135 and RC component separation unit 155, respectively.

The first function of spreading burst errors as irregularly as possible over a FEC block is performed by cell interleaver 135. Cell interleaver 135 operates on non-rotated complex cells, i.e., on the output of the QAM mapper 130. A pseudo-random interleaver like in DVB-T2 is very well suited for this purpose.

The second function of separating the components of the rotated constellation is performed by RC component separation unit 155, which is placed downstream of constellation rotation unit 140. Details of the RC component separation unit 155 will be provided here below.

Since the cell interleaver is directly applied to the QAM symbols produced by the QAM mapper, an alternative but strictly equivalent structure can be obtained by placing the cell interleaver upstream of the QAM mapper, as illustrated in Figure 6B. In this case the interleaver no longer interleaves QAM symbols but groups of 2B bits, each group modulating one QAM symbol. Moreover, the bit interleaver and the cell interleaver can now be regarded as a new bit interleaver.

As already explained above, it is important that the components of a constellation block experience uncorrelated channel fading. Therefore, the D components are preferably mapped to D different complex cells and the channel fading experienced by these cells should be as uncorrelated as possible. In this way, the gain of the rotated constellations, and thus the performance of the system, is maximized. In the general case of rotated constellations in D dimensions, the best performance is obtained if the time intervals (distances) between two components of the same constellation block are as evenly distributed as possible and as large as possible, for all constellation blocks of a FEC block.

In the following, a method performed by RC component separation unit 155 for achieving the ideal spreading is described. As an example, a FEC block containing 24 complex cells, as well as 2D and 4D rotated constellations, are considered.

In a first step, the D components of each constellation block are mapped onto D adjacent complex cells. This can be achieved in several ways and the details are not relevant for the present invention.

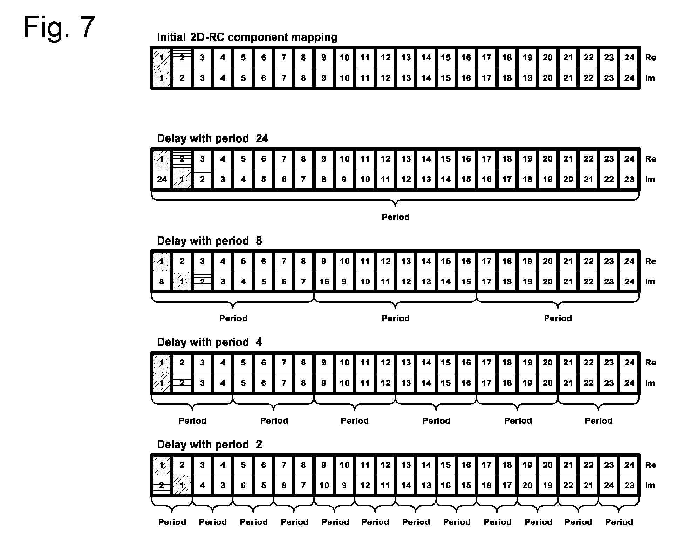

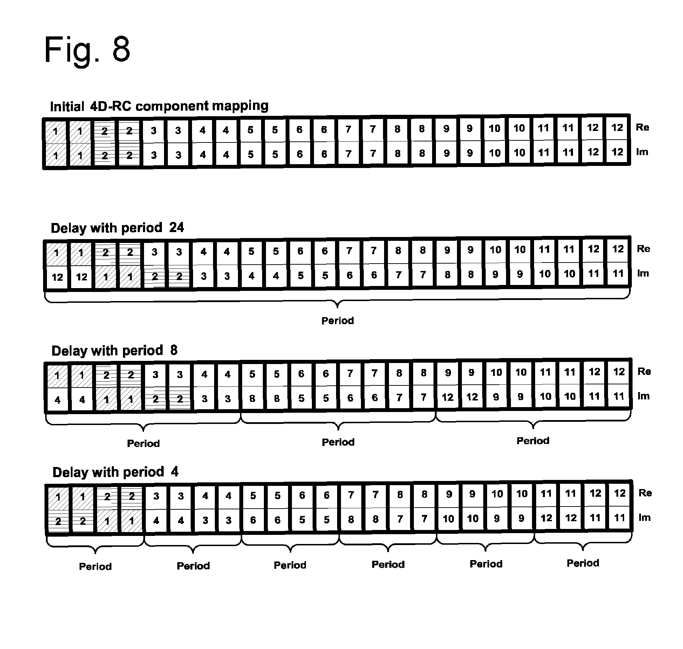

For example, each constellation block may be mapped onto $D/2$ adjacent complex cells and a relative delay of $D/2$ symbols between the real and the imaginary components of the complex cells may be inserted. The relative delay is cyclical, with a specified period, which is, however, not important for the present invention. Fig. 7, for instance, shows the resulting mapping for 2D-RC with delay periods 24, 8, 4, and 2. Likewise, Fig. 8 shows the mapping for 4D-RC with delay periods 24, 8, and 4. For obvious reasons, a period of 2 is not possible in the latter case. In general, the delay period must be a multiple of D and a divisor of $N_c$.

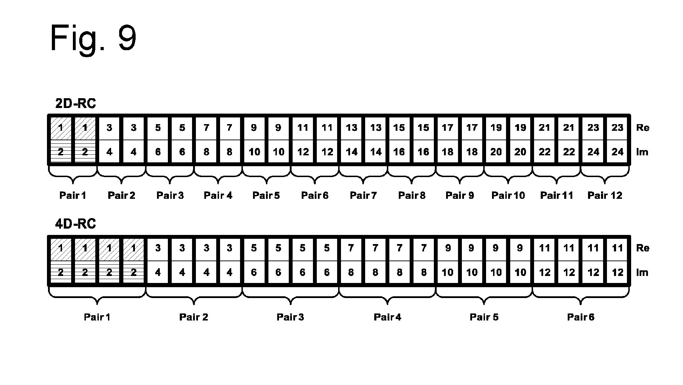

Alternatively, each pair of constellation blocks may be mapped onto D adjacent cells. This is equivalent to a delay period of D. One block may be mapped onto the real components, and the other onto the imaginary components of the D cells, as illustrated in Fig. 9 for 2D-RC and 4D-RC.

In a second step, a permutation is applied to the cells of the resulting FEC block so that the D components of each constellation block are evenly spread over the entire FEC block. The relevant parameters here are the number of cells per FEC block $N_c$ and the number of dimensions D. This permutation corresponds to the pseudo-random cell permutation in the DVB-T2 standard. Unlike a pseudo-random permutation, the permutation according to the present invention ensures an even spreading of the D constellation components, thereby improving the performance of the rotated constellation.

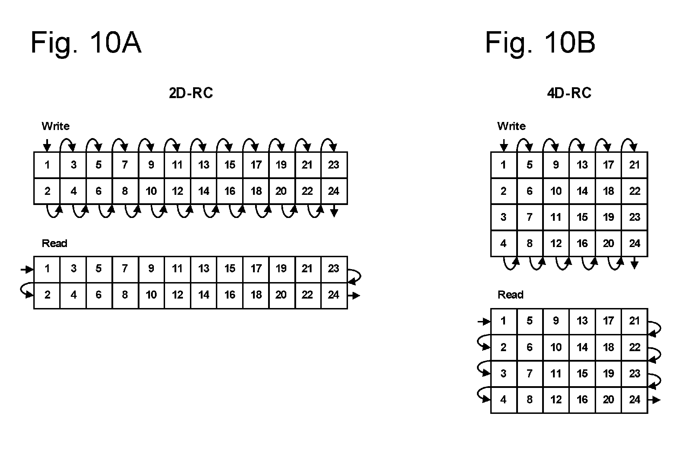

In a preferred embodiment of the present invention, a specific permutation for permuting the cells of the FEC block is provided. The preferred permutation is equivalent to writing the $N_c$ cells of the FEC block into a matrix with D rows column by columns and reading out the cells row by row. This is illustrated in Figs. 10A and 10B for 2D-RC and 4D-RC, respectively. Here, the numbered squares correspond to complex cells rather than to constellation components.

In case $N_c$ is not a divisor of D the last column will be incomplete. Since $N_c$ is always a multiple of $D/2$, however, only $D/2$ cells can be missing in the last column, i.e. half the column. The number of columns is ceil($N_c/D$).

The same permutation may also be expressed in mathematical terms. When $N_c$ is a multiple of D, the output cell index $j$ can be expressed as a function of the input cell index i as follows.

$$j = \mathrm{rem}(i,\,D) * N_C/D + \mathrm{floor}(i/D);\ \text{where } i,\,j \text{ are in the interval } 0\ldots N_C\text{-}1.$$

After applying this permutation, the resulting FEC block will consists of D contiguous regions, each region containing one component from each constellation block. The distance between the components of a constellation block is $N_c/D$ or $N_c/D$-1, i.e. the spreading is as even as possible.

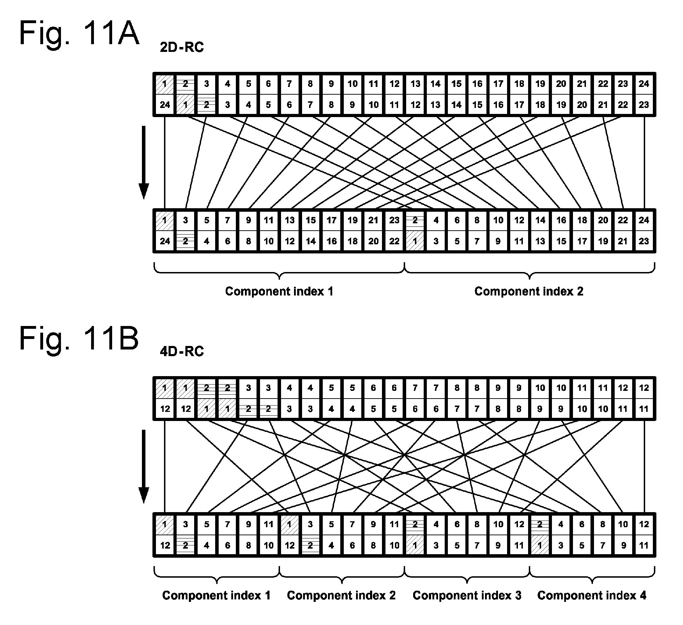

Figs. 11 A and B show the resulting mapping of the constellation components after the permutation step for 2D-RC and 4D-RC, respectively, when a cyclic delay with a period of 24 cells (maximum) is used. The even spread of the D components over the entire FEC block is apparent for all constellation blocks, i.e., a minimum distance between complex symbols with symbols of the same constellation block is, with at most one exception, the same for all constellation blocks. For 2D-RC, the minimum distance is 12 cells with the only exception of the 24th constellation block, having a distance of 23 cells. For 4D-RC, the minimum distance is 6 cells with no exception.

In a third step, the permuted FEC block may be mapped to one or more frames, in sequential order, and/or to one or more channels or frequencies. This step is performed by time/frequency interleaver 170 in Fig. 6. If the FEC block is spread over multiple frames $N_F$ it will be first divided into $N_F$ contiguous slices and each slice will be mapped to exactly one of the $N_F$ frames. Preferably, the $N_F$ slices are of equal size in order to ensure optimum time diversity.

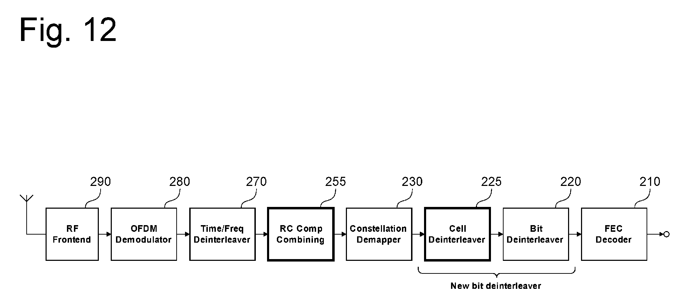

Fig. 12 is a block diagram of an exemplary receiver in accordance with an embodiment of the present invention. The receiver mirrors the functionality of the transmitters illustrated in Figs. 6A and 6B. The received signal is first processed by a radio-frequency RF frontend 220, which typically comprises a tuner and a down-converter to digital baseband. The digital baseband signal is then demodulated by OFDM demodulator 280, resulting in a stream of complex cells and their associated complex channel coefficients.

The cells belonging to the desired services or programs are extracted from the cell stream according to a schedule signaled by the transmitter, and are then deinterleaved by the time and frequency deinterleaver 270, which produces at its output a plurality of FEC blocks consisting of complex cells.

The D components of the constellation blocks mapped onto the complex cells of each FEC block are then extracted from the FEC block and combined into $D/2$ adjacent complex cells in unit 255, which are then jointly demodulated by the constellation demapper 230. This demapper performs the de-rotation and the QAM demapping as a single step and produces D*B "soft" bits per constellation block at its output.

For each FEC block the constellation demapper 230 will produce a multiple of 2*B bits, where 2*B is the number of bits that modulate a complex QAM symbol. The groups of 2*D bits are deinterleaved by the cell deinterleaver 225, which applies the inverse of the cell-interleaver permutation of cell interleaver 125 described above.

The resulting groups of 2*D bits in each FEC block are optionally deinterleaved by the bit deinterleaver 220, decoded by the FEC decoder 210, and fed to the subsequent blocks for further processing.

Summarizing, the present invention provides methods, transmitters, and receivers for digital communication systems with improved cell interleaving and component separation for rotated constellations in two or more dimensions. This is achieved by providing two independent functional blocks for spreading burst errors over a FEC block and for spreading the rotated constellation components over time and frequency, respectively. In this manner, each block may be optimized for its specific function.

**Claims**

1. A method for transmitting digital data, said method comprising the steps of:

   encoding (110) a block of data with a forward error correction code;
   mapping (130) the encoded block of data to a sequence of real-valued symbols;
   applying (135) a symbol permutation to the sequence of real-valued symbols;
   dividing the permuted sequence of real-valued symbols into a plurality of D-dimensional vectors and transforming (140) each of the D-dimensional vectors by multiplying the vector with an orthogonal matrix, resulting in a plurality of constellation blocks, each constellation block consisting of D real-valued transformed symbols;
   mapping (155) the real-valued transformed symbols of the plurality of constellation blocks to a sequence of complex symbols such that the D real-valued transformed symbols of each constellation block are mapped to D distinct complex symbols; and
   transmitting the sequence of complex symbols.

2. A method according to claim 1, wherein the step of applying the symbol permutation is performed by dividing the sequence of real-valued symbols into pairs of two consecutive real-valued symbols, each pair representing a complex-valued symbol, and by shuffling the sequence of the complex-valued symbols.

3. A method according to any of the preceding claims, wherein the mapping of the real-valued transformed symbols to the sequence of complex symbols is performed such that the D real-valued transformed symbols of each constellation block are essentially evenly distributed over the sequence of complex symbols.

4. A method according to any of the preceding claims, wherein the sequence of complex symbols is transmitted such that any two consecutive complex symbols of the sequence of complex symbols are transmitted either simultaneously or in the stated order.

5. A method according to any of the preceding claims, further comprising the step of applying a bit permutation to the encoded block of data, wherein the mapping step (130) is applied to the permuted encoded block of data.

6. A method according to claim 5, wherein the bit permutation is equivalent to writing the bits of the encoded block of data into a matrix column-by-column and reading out the bits row-by-row.

7. A method according to claim 5 or 6, wherein the steps of applying the symbol permutation and applying the bit permutation are performed by applying a single permutation to the bits of the encoded block of data, the single permutation being equivalent to a mathematical concatenation of the bit permutation and the symbol permutation.

8. A method according to any of claims 1 to 7, wherein the step of mapping the real-valued transformed symbols to the sequence of complex symbols is performed by
   mapping the D real-valued transformed symbols of each constellation block to D adjacent complex symbols, and applying a permutation to the sequence of complex symbols, said permutation being equivalent to writing the sequence of complex symbols into a matrix with D rows column by column and reading out the complex symbols row by row.

9. A method according to any of claims 1 to 7 wherein the step of mapping the real-valued transformed symbols to the sequence of complex symbols is performed by
   mapping the D real-valued transformed symbols of each constellation block to $D/2$ adjacent complex symbols, and applying a cyclic shift to either the real or the imaginary components of the sequence of complex symbols such that the real and the imaginary components are rotated relative to each other by a certain number of complex symbols, the certain number of complex symbols being equal to D/2 or to a number larger than D/2.

**10.** A method according to claim 9, further comprising the step of applying a permutation to the sequence of cyclically shifted complex symbols, said permutation being equivalent to writing the sequence of complex symbols into a matrix with D rows column by column and reading out the complex symbols row by row.

**11.** A method for receiving digital data, said method comprising the steps of:

receiving (290, 280) a sequence of complex symbols;
demapping (255, 230) real-valued symbols of a plurality of constellation blocks from the sequence of complex symbols, the D real-valued symbols of each constellation block being essentially evenly distributed over the sequence of complex symbols;
applying (225) an inverse permutation to the sequence of real-valued symbols, the inverse permutation being adapted for reverting the symbol permutation performed by the method of any of claims 1 to 10;
demapping (220) an encoded block of data from the permuted sequence of real-valued symbols; and
subjecting the encoded block of data to forward error correction decoding (210).

**12.** A method according to any of the preceding claims, wherein each real-valued symbol indicates one of a plurality of predefined pulse amplitude modulation symbols.

**13.** A method according to any of the preceding claims, wherein D is a power of two, preferably 2 or 4 or 8.

**14.** A transmitter for transmitting digital data, said transmitter comprising:

an encoder (110) adapted for encoding a block of data with a forward error correction code;
a mapping unit (130) adapted for mapping the encoded block of data to a sequence of real-valued symbols;
a cell interleaver (135) adapted for applying a symbol permutation to the sequence of real-valued symbols;
a transform unit (140) adapted for dividing the permuted sequence of real-valued symbols into a plurality of D-dimensional vectors and for transforming each of the D-dimensional vectors by multiplying the vector with an orthogonal matrix, resulting in a plurality of constellation blocks, each constellation block consisting of D real-valued transformed symbols;
a separation unit (155) adapted for mapping the real-valued transformed symbols of the plurality of constellation blocks to a sequence of complex symbols such that the D real-valued transformed symbols of each constellation block are essentially evenly distributed over the sequence of complex symbols; and
a modulator (180) adapted for transmitting the permuted sequence of complex symbols.

**15.** A receiver for receiving digital data, said receiver comprising:

a demodulator (280) for receiving a sequence of complex symbols;
constellation demapper (255, 230) adapted for demapping real-valued symbols of a plurality of constellation blocks from the sequence of complex symbols, the D real-valued symbols of each constellation block being essentially evenly distributed over the sequence of complex symbols;
a cell deinterleaver (225) adapted for applying an inverse permutation to the sequence of real-valued symbols, the inverse permutation being adapted for reverting the symbol permutation performed by the method of any of claims 1 to 10;
a bit deinterleaver (220) adapted for demapping an encoded block of data from the permuted sequence of real-valued symbols; and
a decoder (210) for subjecting the encoded block of data to forward error correction decoding.

# Fig. 1

| 110 | 120 | 130 | 140 | 150 | 160 | 170 | 180 | 190 |
|---|---|---|---|---|---|---|---|---|
| FEC Encoder | Bit Interleaver | QAM Mapper | Rotation | Q-Delay Insertion | Cell Interleaver | Time/Freq Interleaver | OFDM Modulator | RF Amplifier |

RC component separation

# Fig. 2

**Initial QAM complex cells**

| | | | | | | | | | | | | | | | | | | | | | | | | Re |
|---|---|---|---|---|---|---|---|---|---|---|---|---|---|---|---|---|---|---|---|---|---|---|---|---|
| | | | | | | | | | | | | | | | | | | | | | | | | Im |

**2D constellation rotation (2 components jointly encoded)**

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | Re |
|---|---|---|---|---|---|---|---|---|---|---|---|---|---|---|---|---|---|---|---|---|---|---|---|---|
| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | Im |

**Imaginary component delay with 1 cell**

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | Re |
|---|---|---|---|---|---|---|---|---|---|---|---|---|---|---|---|---|---|---|---|---|---|---|---|---|
| 24 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | Im |

# Fig. 3

**Initial QAM complex cells**

| | | | | | | | | | | | | | | | | | | | | | | | | Re |
|---|---|---|---|---|---|---|---|---|---|---|---|---|---|---|---|---|---|---|---|---|---|---|---|---|
| | | | | | | | | | | | | | | | | | | | | | | | | Im |

**4D constellation rotation (4 components jointly encoded)**

| 1 | 1 | 2 | 2 | 3 | 3 | 4 | 4 | 5 | 5 | 6 | 6 | 7 | 7 | 8 | 8 | 9 | 9 | 10 | 10 | 11 | 11 | 12 | 12 | Re |
|---|---|---|---|---|---|---|---|---|---|---|---|---|---|---|---|---|---|---|---|---|---|---|---|---|
| 1 | 1 | 2 | 2 | 3 | 3 | 4 | 4 | 5 | 5 | 6 | 6 | 7 | 7 | 8 | 8 | 9 | 9 | 10 | 10 | 11 | 11 | 12 | 12 | Im |

**Imaginary component delay with 2 cell**

| 1 | 1 | 2 | 2 | 3 | 3 | 4 | 4 | 5 | 5 | 6 | 6 | 7 | 7 | 8 | 8 | 9 | 9 | 10 | 10 | 11 | 11 | 12 | 12 | Re |
|---|---|---|---|---|---|---|---|---|---|---|---|---|---|---|---|---|---|---|---|---|---|---|---|---|
| 12 | 12 | 1 | 1 | 2 | 2 | 3 | 3 | 4 | 4 | 5 | 5 | 6 | 6 | 7 | 7 | 8 | 8 | 9 | 9 | 10 | 10 | 11 | 11 | Im |

# Fig. 4A

# Fig. 4B

EP 2 597 837 A1

# Fig. 5A

QPSK

Re{z} conveys bit $y_{0,q}$
Im{z} conveys bit $y_{1,q}$

# Fig. 5B

16QAM

Re{z} conveys bits $y_{0,q}$, $y_{2,q}$
Im{z} conveys bits $y_{1,q}$, $y_{3,q}$

# Fig. 5C

64QAM

Re{z} conveys bits $y_{0,q}$, $y_{2,q}$, $y_{4,q}$
Im{z} conveys bits $y_{1,q}$, $y_{3,q}$, $y_{5,q}$

13

# Fig. 6A

# Fig. 6B

Fig. 7

**Initial 2D-RC component mapping**

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | Re |
|---|---|---|---|---|---|---|---|---|----|----|----|----|----|----|----|----|----|----|----|----|----|----|----|----|
| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | Im |

**Delay with period 24**

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | Re |
|----|----|---|---|---|---|---|---|---|----|----|----|----|----|----|----|----|----|----|----|----|----|----|----|----|
| 24 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | Im |

Period

**Delay with period 8**

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | Re |
|---|---|---|---|---|---|---|---|----|----|----|----|----|----|----|----|----|----|----|----|----|----|----|----|----|----|
| 8 | 1 | 2 | 3 | 4 | 5 | 6 | 7 | 16 | 9 | 10 | 11 | 12 | 13 | 14 | 15 | 17 | 18 | 19 | 20 | 21 | 22 | 23 | 24 | Im |

Period   Period   Period

**Delay with period 4**

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | Re |
|---|---|---|---|---|---|---|---|---|----|----|----|----|----|----|----|----|----|----|----|----|----|----|----|----|
| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | Im |

Period   Period   Period   Period   Period   Period

**Delay with period 2**

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | Re |
|---|---|---|---|---|---|---|---|----|---|----|----|----|----|----|----|----|----|----|----|----|----|----|----|----|
| 2 | 1 | 4 | 3 | 6 | 5 | 8 | 7 | 10 | 9 | 12 | 11 | 14 | 13 | 16 | 15 | 18 | 17 | 20 | 19 | 22 | 21 | 24 | 23 | Im |

Period  Period  Period  Period  Period  Period  Period  Period  Period  Period  Period  Period

# Fig. 8

**Initial 4D-RC component mapping**

**Delay with period 24**

**Delay with period 8**

**Delay with period 4**

# Fig. 9

**2D-RC**

**4D-RC**

# Fig. 10A

## 2D-RC

# Fig. 10B

## 4D-RC

## Fig. 11A  2D-RC

Component index 1     Component index 2

## Fig. 11B  4D-RC

Component index 1   Component index 2   Component index 3   Component index 4

# Fig. 12

290 280 270 255 230 225 220 210

| RF Frontend | → | OFDM Demodulator | → | Time/Freq Deinterleaver | → | RC Comp Combining | → | Constellation Demapper | → | Cell Deinterleaver | → | Bit Deinterleaver | → | FEC Decoder | →○ |

New bit deinterleaver

Europäisches
Patentamt

European
Patent Office

Office européen
des brevets

# EUROPEAN SEARCH REPORT

Application Number

EP 11 19 0793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/143861 A2 (LG ELECTRONICS INC [KR]; KO WOOSUK [KR]; MOON SANGCHUL [KR]) 16 December 2010 (2010-12-16) | 1-7,9, 11-15 | INV. H04L27/34 H04L1/00 |
| Y | * paragraph [0001] * <br> * paragraphs [0052], [0053] * <br> * paragraph [0063] * <br> * paragraphs [0065] - [0072] * <br> * paragraphs [0074] - [0076] * <br> * paragraphs [0117], [0118] * <br> * paragraphs [0123], [0124] * <br> * figures 1,5,6,14,17 * | 8,10 | |
| Y | DE 10 2009 030676 A1 (ROHDE & SCHWARZ [DE]) 30 December 2010 (2010-12-30) <br> * paragraphs [0026] - [0029] * <br> * figure 5 * | 8,10 | |
| Y | WO 2011/010180 A1 (THOMSON LICENSING [FR]; ZHOU WEI [CN]; ZOU LI [CN]) 27 January 2011 (2011-01-27) <br> * Crossing paragraph between pages 5 and 6; Figure 1c. * | 8,10 | |
| Y | EP 1 667 349 A1 (MATSUSHITA ELECTRIC IND CO LTD [JP] PANASONIC CORP [JP]) 7 June 2006 (2006-06-07) <br> * paragraphs [0045] - [0052] * <br> * figures 7,9,11 * | 8,10 | TECHNICAL FIELDS SEARCHED (IPC) <br><br> H04L <br> H03M |

-/--

The present search report has been drawn up for all claims

| Place of search | Date of completion of the search | Examiner |
|---|---|---|
| Munich | 23 May 2012 | Meister, Mark |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

**EUROPEAN SEARCH REPORT**

Application Number

EP 11 19 0793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WU ZHANJI ET AL: "A novel Joint-Coding-Modulation-Diversity OFDM system", MOBILE CONGRESS (GMC), 2010 GLOBAL, IEEE, PISCATAWAY, NJ, USA, 18 October 2010 (2010-10-18), pages 1-6, XP031800622, ISBN: 978-1-4244-9001-1 * Paragraph "II.I Roated Modulation (RM)" (formula). * ----- | 1-15 | |

TECHNICAL FIELDS SEARCHED (IPC)

The present search report has been drawn up for all claims

| Place of search | Date of completion of the search | Examiner |
|---|---|---|
| Munich | 23 May 2012 | Meister, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 19 0793

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2012

| Patent document cited in search report | Publication date | Patent family member(s) | | Publication date |
|---|---|---|---|---|
| WO 2010143861 A2 | 16-12-2010 | NONE | | |
| DE 102009030676 A1 | 30-12-2010 | NONE | | |
| WO 2011010180 A1 | 27-01-2011 | NONE | | |
| EP 1667349 A1 | 07-06-2006 | BR | PI0414902 A | 07-11-2006 |
| | | CN | 1846382 A | 11-10-2006 |
| | | EP | 1667349 A1 | 07-06-2006 |
| | | KR | 20060097721 A | 14-09-2006 |
| | | US | 2007135049 A1 | 14-06-2007 |
| | | WO | 2005032021 A1 | 07-04-2005 |

EPO FORM P0459

For more details about this annex : see Official Journal of the European Patent Office, No. 12/82